# EUROPÄISCHE PATENTSCHRIFT

(11) **EP 3 557 041 B1**
(45) Veröffentlichungstag und Bekanntmachung des Hinweises auf die Patenterteilung: **16.03.2022**
(21) Anmeldenummer: 18167560.4
(22) Anmeldetag: 16.04.2018
(51) Int. Cl.: F03D 1/06

(54) **HÜLSE FÜR EIN WINDENERGIEANLAGENROTORBLATT, FLANSCHEINLEGER, WINDENERGIEANLAGENROTORBLATT UND WINDENERGIEANLAGE**
SLEEVE FOR A WIND ENERGY ASSEMBLY ROTOR BLADE, FLANGE INSERTER, WIND ENERGY ASSEMBLY ROTOR BLADE AND WIND TURBINE
MANCHON POUR UNE PALE DE ROTOR D'ÉOLIENNE, TAMBOUR BRIDÉ, PALE DE ROTOR D'ÉOLIENNE ET ÉOLIENNE

(43) Veröffentlichungstag der Anmeldung: 23.10.2019
(73) Patentinhaber: Nordex Energy SE & Co. KG, 22419 Hamburg (DE)
(72) Erfinder: Werner, Markus, 24242 Felde (DE); Block, Tim Berend, 24558 Henstedt-Ulzburg (DE)
(74) Vertreter: Epping - Hermann - Fischer

(56) Entgegenhaltungen:
- EP-A1- 2 589 796
- WO-A1-2015/124568
- WO-A1-2017/101943
- DE-A1-102011 051 172
- DE-A1-102014 008 558

## Beschreibung

### Die Erfindung betrifft eine Hülse für ein

Windenergieanlagenrotorblatt. Die Erfindung betrifft darüber hinaus einen Flanscheinleger, ein Windenergieanlagenrotorblatt sowie eine Windenergieanlage.

Windenergieanlagen mit Rotorblättern sind aus dem Stand der Technik vielfach bekannt und werden verwendet, um Windenergie in elektrische Energie umzuwandeln. Im Bereich einer Rotorblattwurzel weisen die Rotorblätter einen Rotorblattanschluss mit einer Vielzahl von in das Laminat integrierten Hülsen auf, über welche die Rotorblätter mittels Befestigungsschrauben bzw. -schraubbolzen mit einem Lagerring eines sogenannten Pitchlagers oder mit einem mit dem Lagerring verbundenen Bauteil wie z.B. einem Extender der Windenergieanlage verbunden werden. Die Hülsen können Teil eines Flanscheinlegers für den Rotorblattanschluss sein. Ein derartiger Aufbau ist beispielsweise aus der internationalen Anmeldung WO 2015/124568 A1 bekannt.

Die EP 2 589 796 A1 betrifft ein Verfahren zur Herstellung eines Wurzelabschnitts eines Rotorblatts einer Windkraftanlage. Sie betrifft auch eine Stützstab-Haltevorrichtung für diesen Zweck und einen Wurzelabschnitt eines Rotorblattes einer Windkraftanlage.

Die WO 2017/101943 A1 betrifft eine verbesserte Verbindung zum Verbinden eines Windkraftanlagen-Rotorblatts mit einer Rotornabe sowie auf ein Verfahren zur Herstellung eines Windkraftanlagen-Rotorblatts mit einer verbesserten Verbindung zum Verbinden des Windkraftanlagen-Blatts mit der Rotornabe. Die DE 10 2011 051172 A1 betrifft ein laminiertes Rotorblatt für Windenergieanlagen mit einem Befestigungssystem für Rotorblätter an der Rotornabe mittels eingearbeiteten Inserts im Rotorblattfuß oder in Rotorblattteilen.

Alternativ finden Hülsen auch bei der Verbindung von Rotorblattsegmenten Verwendung, die, der Länge nach angeordnet und zusammengefügt, ein Rotorblatt bilden. Die Hülsen befinden sich dann im Laminat eines Teilungsflansches der Rotorblattsegmente. Die Rotorblattsegmente werden über die Hülsen mittels Schraubbolzen direkt oder über geeignete Zwischenstücke miteinander verbunden.

Eine Aufgabe, die der Erfindung zugrunde liegt, ist es, ein Konzept für Hülsen anzugeben, welches zu einem besonders verlässlichen Betrieb einer Windenergieanlage beiträgt.

Gemäß einem ersten Aspekt wird eine Hülse für ein Windenergieanlagenrotorblatt offenbart. Die Hülse weist ein erstes Hülsenende, welches beispielsweise einem wurzelseitigen Ende des Rotorblattes zugewandt sein kann, und ein gegenüberliegendes zweites Hülsenende auf. In einem betriebsgemäß gefertigten Zustand eines Rotorblattes mit der Hülse ist das zweite Hülsenende beispielsweise einer Rotorblattspitze zugewandt. Die Hülse weist eine Hülsenbohrung auf, die sich in einem Bereich zwischen dem ersten Hülsenende und dem zweiten Hülsenende erstreckt und eine Bohrungslängsachse aufweist. Entlang der Bohrungslängsachse in Richtung des zweiten Hülsenendes weist die Hülsenbohrung einen Gewindeabschnitt auf. Weiter weist die Hülse entlang der Bohrungslängsachse in Richtung des zweiten Hülsenendes einen dem Gewindeabschnitt folgenden Hülsenauslauf auf, wobei der Hülsenauslauf einen Aufweitungsabschnitt besitzt, in welchem sich ein Durchmesser der Hülsenbohrung zumindest monoton vergrößert während eine Durchmesserzunahme zumindest monoton fällt. Es vergrößert sich der Durchmesser im Aufweitungsabschnitt derart, dass der Hülsenauslauf im Aufweitungsabschnitt einen bogenförmigen Verlauf aufweist.

Durch einen wie oben definierten Hülsenauslauf wird zu einer gleichmäßigen Kraftübertragung zwischen der Hülse und einem damit verklebten umliegenden Faserverbundwerkstoff, etwa dem Laminat, in einem betriebsgemäß gefertigten Rotorblatt beigetragen. Dies führt zu einer erhöhten Festigkeit der Konstruktion des Rotorblattes. Weiterhin wird eine signifikante Kostensteigerung bei der Fertigung des Rotorblattes vermieden. Der Hülsenauslauf ist durch die spezielle Ausgestaltung des Aufweitungsabschnitts an eine Festigkeit der Hülse, der Verklebung und des Faserverbundwerkstoffes derart anpassbar, dass lokale Überlastungen minimiert werden.

Es wurde erkannt, dass die Festigkeit eines Rotorblattes im Bereich des Rotorblattanschlusses bzw. des Teilungsflansches bei Rotorblattsegmenten wesentlich von drei Faktoren bestimmt ist: 1) der Festigkeit der Hülse selbst, 2) der Festigkeit einer Verklebung der Hülse mit einem umgebenden Faserverbundwerkstoff, etwa Laminat, sowie 3) der Festigkeit des die Hülse umgebenden Faserverbundwerkstoffs.

In Bereichen, in denen sich eine Steifigkeit der miteinander verklebten Fügepartner stark ändert, können sehr hohe Schubspannungsbelastungen in der Verklebung wirken. Hier können Anrisse entstehen, die sich unter zyklischer Belastung schnell vergrößern und zu einem Versagen der Verbindung der Hülse zum Faserverbundwerkstoff führen. Eine kritische Belastung liegt vor, wenn eine am Rotorblatt angreifende Kraft die Hülse aus dem Faserverbundwerkstoff, etwa dem Laminat, herauszieht. In diesem Fall würde die Kraft von der Hülse in den Faserverbundwerkstoff über Schubspannungen in der Verklebung übertragen. Beispielsweise befinden sich Steifigkeitssprünge am Hülsenauslauf.

Begrenzend wirkt außerdem die Festigkeit der typischerweise aus Stahl gefertigten Hülse. Die Spannungen in der Hülse können insbesondere in den dünnwandigen Bereichen die zulässige Festigkeit übersteigen. In der Folge reißt bzw. bricht die Hülse und an der Bruchstelle wird die Verklebung überlastet, weil der Steifigkeitssprung am Hülsenriss höher ist als beispielsweise an dem spitzenseitigen zweiten Hülsenende.

Durch das erfindungsgemäße Design des Hülsenauslaufs wird eine klebegerechte Konstruktion ermöglicht. Dabei werden Spannungsverläufe und zulässige Spannungen in der Hülse selbst, in der Verklebung und in dem umgebenden Faserverbundwerkstoff des Rotorblatts berücksichtigt. Bei der erfindungsgemäßen Konstruktion ändert sich der Durchmesser im Aufweitungsabschnitt des Hülsenauslaufs zumindest abschnittsweise nicht-linear. Ein rein linearer Verlauf ist ausgeschlossen.

Hier und im Folgenden gilt: Der Hülsenauslauf ist der zum zweiten Hülsenende führende Abschnitt der Hülse. Die Hülse ist beispielsweise zylinderförmig ausgebildet. Der Aufweitungsabschnitt ist im Querschnitt beispielsweise rotationssymmetrisch, alternative Formgebungen, etwa elliptisch oder quadratisch, sind ebenso denkbar. Zumindest monoton bedeutet, dass ein entsprechender Wert oder eine Kenngröße nicht zwingend durchgehend entlang der Bohrungslängsachse steigen bzw. abnehmen muss, sondern auch Abschnitte ohne Steigung oder Abnahme vorhanden sein können. Streng monotone Steigung bzw. Abnahme ist jedoch nicht ausgeschlossen. Die monotone Vergrößerung des Durchmessers bedeutet, dass der Durchmesser im Aufweitungsabschnitt absolut gesehen in Richtung des zweiten Hülsenendes zumindest abschnittsweise immer größer wird, jedoch keine Abschnitte umfasst, in denen der Durchmesser wieder abnimmt. Die monotone Abnahme der Durchmesserzunahme bedeutet, dass die Differenz aufeinanderfolgender Durchmesser des Hülsenauslaufs, etwa pro gleicher Wegeinheit entlang der Bohrungslängsachse, in Richtung des zweiten Hülsenendes geringer wird. Die Differenz aufeinanderfolgender Durchmesser kann abschnittsweise gleich bleiben. Die Vergrößerung des Durchmessers bzw. die Verringerung der Durchmesserzunahme gemäß obiger Bedingungen ist beispielsweise zumindest auf ein Segment des Hülsenauslaufs bezüglich der Bohrungslängsachse bezogen oder ist zumindest zwischen zwei Punkten des Aufweitungsabschnitts bezüglich der Bohrungslängsachse erfüllt.

Mit anderen Worten ist der Durchmesser im Aufweitungsabschnitt durch eine Funktion beschreibbar, die von einem Wert x abhängt, wobei x den Abstand entlang der Längsachse ausgehend von einem Beginn des Aufweitungsabschnitt beschreibt. Diese Funktion ist entlang des gesamten Aufweitungsabschnitts monoton steigend, während die Ableitung nach x monoton abnimmt.

Beispielsweise sind folgende Formen für den Hülsenauslauf, der beispielsweise keinen kegelförmigen und somit linearen Verlauf haben kann, denkbar: Sektglasform, Hyperbeln, Polynome, Exponentialfunktionen und Kombinationen sowie Freiformen, Splines denkbar. Ebenfalls möglich ist eine Annäherung an eine der genannten Formen mittels schrittweise gerader Linien (lineare Verlaufsabschnitte), welche direkt oder durch Übergangsradien miteinander verbunden sind.

Bei der beschriebenen Hülse vergrößert sich der Durchmesser im Aufweitungsabschnitt derart, dass der Hülsenauslauf im Aufweitungsabschnitt einen bogenförmigen Verlauf aufweist. Dadurch weist die Hülsenbohrung im Aufweitungsabschnitt einen geschwungenen, also gekrümmten oder kurvenartigen Verlauf entlang der Bohrungslängsachse auf. Mit anderen Worten ist eine Innenkontur der Hülse des Aufweitungsabschnitts mit einem geschwungenen Verlauf gebildet. Mit wieder anderen Worten ist eine Innenkontur/Bohrungswandung im Querschnitt der Hülse des Aufweitungsabschnitts mit einem geschwungenen Verlauf gebildet. Beispielsweise ist die Bohrung im Aufweitungsabschnitt rotationsparaboloidförmig ausgebildet. Mit anderen Worten vergrößert sich der Durchmesser streng monoton, während die Durchmesserzunahme streng monoton abnimmt. Der Verlauf ist beispielsweise stetig, kann jedoch auch durch lineare Interpolation angenähert sein.

Gemäß einer Ausführungsform weist die Hülse zumindest im Bereich des Aufweitungsabschnitts, bevorzugt im Bereich des Hülsenauslaufs, einen im Wesentlichen konstanten Außendurchmesser auf. Dies trägt zu den oben genannten Vorteilen und Funktionen bei. Im Wesentlichen schließt Ausführungsformen ein, bei denen der Außendurchmesser über die gesamte Distanz im Bereich des Aufweitungsabschnitts konstant ist. Es sind aber auch Ausführungsformen umfasst, bei denen die Hülse im Bereich des Aufweitungsabschnitts außen Erhebungen und/oder Einbuchtungen aufweist und der Außendurchmesser daher leicht variiert. Im Mittel beträgt eine Abweichung von einem konstanten Außendurchmesser nicht mehr als 5 bis 10 %.

Gemäß einer Ausführungsform vergrößert sich der Durchmesser im Aufweitungsabschnitt derart, dass eine Wandstärke der Hülse entlang des Aufweitungsabschnitts in Richtung des zweiten Endes prozentual konstant abnimmt. Beispielsweise verjüngt sich die Wandstärke in diesem Bereich nicht-linear. Insbesondere in Kombination mit dem oben genannten konstanten Außendurchmesser ergibt sich ein besonders optimiertes Design der Hülse. Die prozentuale Abnahme ist wiederum auf die Bohrungslängsachse bezogen. Die Abnahme der Wandstärke ist analog zu oben auf zwei aufeinanderfolgende, gleich große Segmente des Aufweitungsabschnitts bzw. äquidistante Punkte entlang der Bohrungslängsachse bezogen. Die Abnahme ist prozentual gesehen konstant. Dies bedeutet im Umkehrschluss, dass die absolute Abnahme der Wandstärke in Richtung des zweiten Endes immer geringer wird. Mit anderen Worten verringert sich eine Differenz von Wandstärken entlang der Bohrungslängsachse in Richtung des zweiten Hülsenendes.

Gemäß einer Ausführungsform vergrößert sich der Durchmesser im Aufweitungsabschnitt derart, dass eine Querschnittsfläche der Hülse entlang des Aufweitungsabschnitts in Richtung des zweiten Hülsenendes prozentual konstant abnimmt. Insbesondere in Kombination mit dem oben genannten konstanten Außendurchmesser ergibt sich ein besonders optimiertes Design der Hülse. Die prozentuale Abnahme ist wiederum auf die Bohrungslängsachse bezogen. Die Abnahme der Querschnittsfläche ist analog zu oben definiert.

Gemäß einer Ausführungsform bildet der Aufweitungsabschnitt mindestens 50%, insbesondere mindestens 60%, mindestens 70%, mindestens 80% oder mindestens 90%, des Hülsenauslaufs. Die Prozentangaben sind wiederum auf die Bohrungslängsachse bezogen. Beispielsweise kann ein zwischen dem Gewindeabschnitt und dem Aufweitungsabschnitt ein Radiusabschnitt und/oder ein zylindrischer Abschnitt der Hülsenbohrung folgen.

Gemäß einer Ausführungsform nimmt eine Wandstärke der Hülse zwischen dem ersten Hülsenende und dem Gewindeabschnitt, zumindest teilweise zu. Dadurch kann ein Steifigkeitssprung im Bereich des ersten Hülsenendes bei einem betriebsgemäß gefertigten Rotorblatt mit Hülse vermieden oder reduziert werden. Alternativ kann die Wandstärke in diesem Bereich auch abnehmen. Das erste Ende der Hülse ist dann aufgeweitet, um die Flächenpressung zum gegenüberliegenden Bauteil zu verringern.

Gemäß einer Ausführungsform ist am zweiten Hülsenende eine umlaufende Fase oder ein umlaufender Radius ausgebildet. Die Fase oder der Radius dient der Fertigung eines strukturell verbesserten Hülsenendes, wodurch eine Delaminationsneigung an dieser Stelle reduziert wird.

Gemäß einer Ausführungsform ist die Hülse einstückig gefertigt.

Gemäß einer Ausführungsform erstreckt sich die Hülsenbohrung durchgängig von dem ersten Hülsenende zu dem zweiten Hülsenende. Eine durchgängige Hülsenbohrung erleichtert die Fertigung der Hülse. Alternativ kann die Bohrung auch an einer Stelle der Hülse unterbrochen sein. In diesem Fall gibt es zwei Bohrungen, welche sich jeweils von einem Hülsenende aus in die Hülse hinein erstrecken, auf der gleichen Bohrungslängsachse liegen und durch eine Barriere voneinander getrennt sind. Diese Barriere kann sich beispielsweise zwischen dem Gewindeabschnitt und dem Hülsenauslauf befinden. Eine derartige Ausführung ist insbesondere bei der Infusion von Vorteil, da ein Eindringen von Infusionsharz in den Gewindeabschnitt ausgeschlossen werden kann.

Gemäß einem zweiten Aspekt wird ein Flanscheinleger für ein Windenergieanlagenrotorblatt offenbart. Der Flanscheinleger weist mehrere nebeneinander angeordnete Hülsen nach einer der obigen Ausführungen auf, wobei die Hülsen in ein oder mehrere Laminatlagen eingebettet sind. Bei Verwendung des Flanscheinlegers für den Rotorblattanschluss sind die Hülsen kreisförmig oder kreissegmentförmig nebeneinander angeordnet. Bei Verwendung des Flanscheinlegers für den Verbindungsflansch eines Rotorblattsegments können die Hülsen so nebeneinander angeordnet sein, dass sie dem Verlauf der Blattkontur folgen.

### Gemäß einem dritten Aspekt wird ein

Windenergieanlagenrotorblatt offenbart, welches einen Rotorblattanschluss mit mehreren, kreisförmig angeordneten Hülsen nach einer der obigen Ausführungen aufweist.

### Gemäß einem vierten Aspekt wird ein

Windenergieanlagenrotorblatt offenbart, welches ein Rotorblattsegment mit einem Verbindungsflansch mit mehreren, nebeneinander angeordneten Hülsen nach einer der obigen Ausführungen aufweist.

Gemäß einem fünften Aspekt wird eine Windenergieanlage offenbart, welche einen Rotor mit einem oder mehreren Rotorblättern nach oben beschriebener Ausführung aufweist.

Der Flanscheinleger, das Windenergieanlagenrotorblatt und die Windenergieanlage ermöglichen die vorgenannten Vorteile und Funktionen.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente sind in den Figuren mit den gleichen Bezugszeichen versehen.

In den Figuren zeigen:
Figur 1 eine schematische Darstellung einer Windenergieanlage gemäß einem Ausführungsbeispiel,
Figur 2 eine schematische Darstellung eines Windenergieanlagenrotorblatts,
Figur 3 eine schematische Darstellung eines Flanscheinlegers für das Rotorblatt,
Figur 4 eine schematische Querschnittsansicht einer Hülse des Rotorblatts gemäß einem Ausführungsbeispiel der Erfindung,
Figur 5 einen Schubspannungsverlauf der Hülse gemäß dem Ausführungsbeispiel im Vergleich zu einer herkömmlichen Hülse in einer schematischen Diagrammansicht und
Figur 6 ein Werkzeug zur Fertigung der erfindungsgemäßen Hülse.

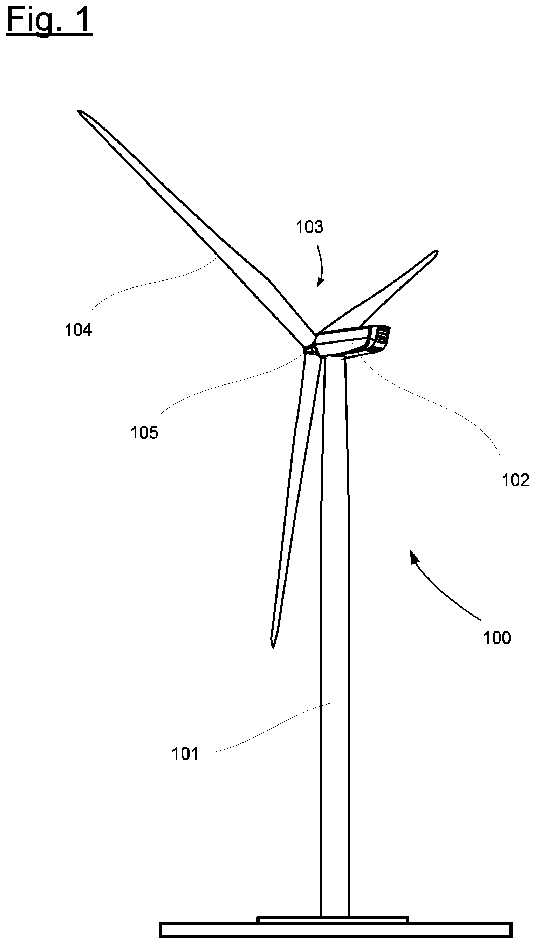

Figur 1 zeigt eine schematische Darstellung einer Windenergieanlage 100 gemäß einem Ausführungsbeispiel. Die Windenergieanlage 100 weist einen Turm 101 auf. Der Turm 101 ist mittels eines Fundaments auf einem Untergrund befestigt. An einem dem Untergrund gegenüberliegenden Ende des Turms 101 ist eine Gondel 102 drehbar gelagert. Die Gondel 102 weist beispielsweise einen Generator auf, der über eine Rotorwelle (nicht gezeigt) mit einem Rotor 103 gekoppelt ist. Der Rotor 103 weist ein oder mehrere Rotorblätter 104 auf, die an einer Rotornabe 105 angeordnet sind.

Der Rotor 103 wird im Betrieb durch eine Luftströmung, beispielsweise Wind in Rotation versetzt. Diese Rotationsbewegung wird über die Rotorwelle und gegebenenfalls ein Getriebe auf den Generator übertragen. Der Generator wandelt die kinetische Energie des Rotors 103 in elektrische Energie um.

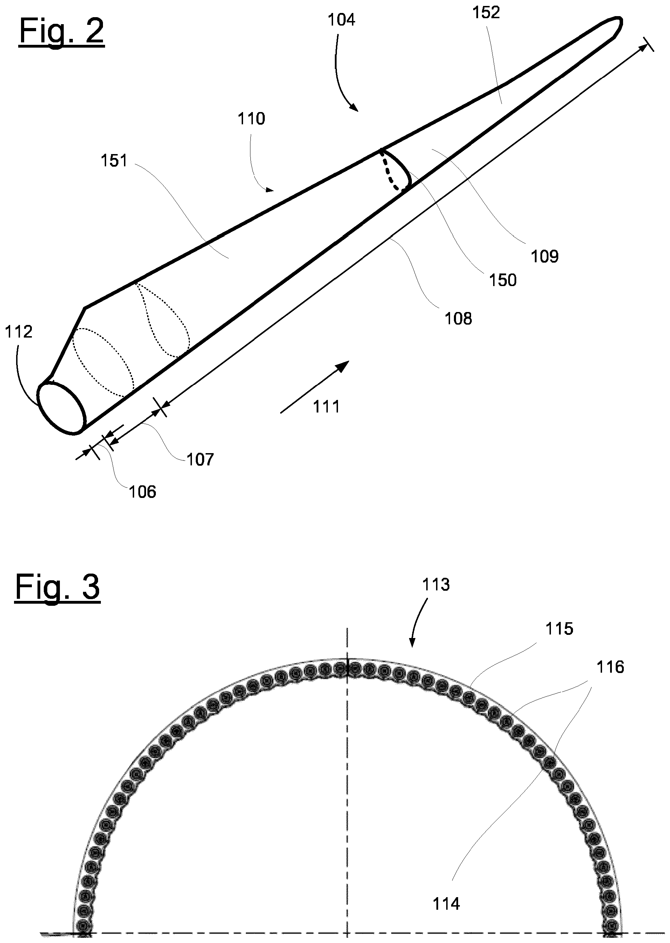

Figur 2 zeigt ein exemplarisches Rotorblatt 104 der Windenergieanlage 100. Das Rotorblatt 104 hat die Form eines herkömmlichen Rotorblattes und hat einen Rotorblattwurzelbereich 106, der der Rotornabe 105 zugewandt und zugeordnet ist. Der Rotorblattwurzelbereich 106 hat typischerweise einen im Wesentlichen kreisrunden Querschnitt. An den Rotorblattwurzelbereich 106 schließen sich ein Übergangsbereich 107 und ein Profilbereich 108 des Rotorblatts 104 an. Das Rotorblatt 104 hat bezüglich einer Längserstreckungsrichtung 111 eine Druckseite 109 und eine gegenüberliegende Saugseite 110. Das Rotorblatt 104 ist im Inneren im Wesentlichen hohl ausgebildet.

Im Rotorblattwurzelbereich 106 ist ein Rotorblattanschluss 112 vorgesehen, mittels welchem das Rotorblatt 104 mit der Rotornabe 105 mechanisch verbunden wird.

Das Rotorblatt 104 weist eine Teilungsstelle 150 auf, an welcher ein blattwurzelseitiges Rotorblattsegment 151 und ein blattspitzenseitiges Rotorblattsegment 152 über Teilungsflansche miteinander verbunden sind.

Zur Herstellung des Rotorblattanschlusses 112 ist typischerweise ein Flanscheinleger 113 vorgesehen. Dabei handelt es sich um ein kreisbogeninnen und -außenseitiges Laminat 114 und 115, in welches in Längserstreckungsrichtung 111 Hülsen 116 mit Gewinden eingebettet sind. Bei den Hülsen 116 handelt es sich beispielsweise um metallische Hülsen, insbesondere Stahlhülsen. Ein halbkreisförmiges Segment ist in Figur 3 gezeigt. Zunächst wird der Flanscheinleger 113 gefertigt, wobei die Hülsen 116 in festen Abständen zueinander, etwa mittels Abstandselementen, kreisförmig angeordnet werden. Anschließend werden die Laminate 114 und 115 sowie die Hülsen 116 luftdicht verschlossen und mit einem Matrixwerkstoff, etwa Epoxidharz infundiert. In einem weiteren Schritt wird der Flanscheinleger 113 beispielsweise in eine Hauptform zur Fertigung einer Rotorblattschale eingelegt und mit weiteren Faserlagen verbunden.

Es ist jedoch auch denkbar, dass kein Flanscheinleger 113 vorgesehen ist und die Hülsen 116 direkt in das Laminat des Rotorblatts 104, etwa in Rotorblatthalbschalen, eingebettet werden.

Analog sind die beiden Rotorblattsegmente 151 und 152 über Hülsen mit oder ohne Flanscheinleger verbunden.

Es sei an dieser Stelle erwähnt, dass die Ausbildung des Rotorblattes 104 mittels der Rotorblattsegmente 151 und 152 und die damit verbundene Teilungsstelle 150 optional sind. Das Rotorblatt 104 kann über die Längserstreckungsrichtung 111 auch nicht segmentiert sein.

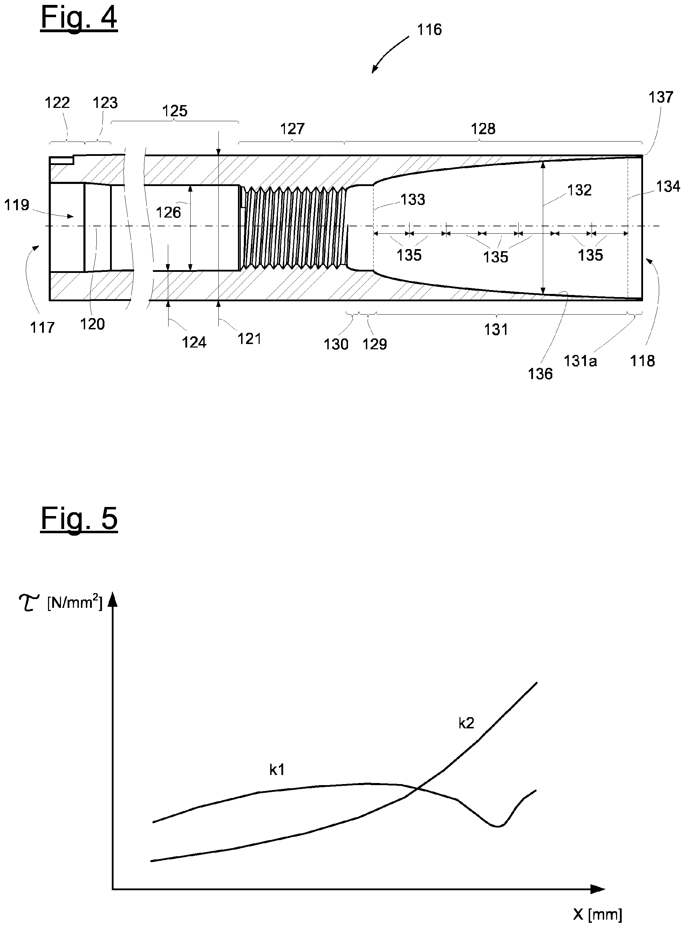

Figur 4 zeigt eine Hülse 116 gemäß einem Ausführungsbeispiel der Erfindung.

Die Hülse 116 gemäß Figur 4 hat ein erstes Hülsenende 117 und ein gegenüberliegendes zweites Hülsenende 118. Die Hülse 116 ist zylindrisch geformt und hat eine durchgängige Hülsenbohrung 119, die sich vom ersten Hülsenende 117 zum zweiten Hülsenende 118 erstreckt. Die Hülsenbohrung 119 hat eine Bohrungslängsachse 120, die auch als Längsachse der Hülse 116 angesehen werden kann. Die Hülse 116 hat einen konstanten Außendurchmesser 121 und ist rotationssymmetrisch geformt.

Ausgehend von dem ersten Hülsenende 117 hat die Hülsenbohrung 119 - hier und im Folgenden stets auf die Bohrungslängsachse 120 bezogen - einen ersten Abschnitt 122, der zylindrisch ausgebildet ist. An den ersten Abschnitt 122 schließt ein zweiter Abschnitt 123 an, bei dem sich die Wandstärke 124 der Hülse 116 vergrößert bzw. der Innendurchmesser 126 der Hülsenbohrung 119 verringert. An den zweiten Abschnitt 123 schließt ein dritter Abschnitt 125 an, der wieder zylindrisch ausgebildet ist, jedoch mit im Vergleich zum ersten Abschnitt 122 verringertem Innendurchmesser 126. An den dritten Abschnitt 125 schließt ein Gewindeabschnitt 127 an, wobei die Hülsenbohrung 119 ein Innengewinde aufweist. Dem Gewindeabschnitt 127 folgt der sogenannte Hülsenauslauf 128. Der Hülsenauslauf 128 betrifft einen Abschnitt der Hülse 116 bis zum zweiten Hülsenende 118, in welchem sich der Innendurchmesser 126 und korrespondierend die Wandstärke 124 der Hülse 116 wie nachfolgend beschrieben verändern.

Der Hülsenauslauf 128 weist einen optionalen zylindrischen Abschnitt 129 auf, der mittels eines optionalen Radiusabschnitts 130 mit dem Gewindeabschnitt 127 verbunden ist (Gewindefreistich). Schließlich weist der Hülsenauslauf 128 wesentlich einen Aufweitungsabschnitt 131 auf, der mehr als 80 % des gesamten Hülsenauslaufs 128 - bezüglich der Bohrungslängsachse 120 - ausmacht. Kurz vor dem zweiten Hülsenende 118 geht der Aufweitungsabschnitt 131 optional in einen weiteren zylindrischen Abschnitt 131a über.

Der Hülsenauslauf 128 ist im Aufweitungsabschnitt 131 so ausgebildet, dass sich ein (Innen-)Durchmesser 132 der Hülsenbohrung 119 von einem Beginn 133 des Aufweitungsabschnitts 131 bis zu einem Ende 134 des Aufweitungsabschnitts 131 streng monoton vergrößert. Die Vergrößerung des Durchmessers 132 unterliegt zudem noch der Bedingung, dass die absolute Durchmesserzunahme streng monoton abnimmt. Diese beiden Bedingungen für den Durchmesser 132 sind zwischen dem Beginn 132 und dem Ende 134, bezogen auf die Bohrungslängsachse 120, erfüllt. Im Ausführungsbeispiel ist der Aufweitungsabschnitt 131 in nicht zwingend gleichlange Segmente 135 entlang der Bohrungslängsachse 120 unterteilt, wobei die Bedingungen für jedes Segment 135, aber auch über zwei Segmente hinweg erfüllt sind. Die Größe und Anzahl der Segmente 135 des Aufweitungsabschnitts 131 sind frei definierbar. Die Segmente 135 sind durch Radien miteinander verbunden. Dadurch ergibt sich ein nicht-linearer Verlauf des Durchmessers 132. Im gezeigten Querschnitt gemäß Figur 4 gleicht der Verlauf einer die Hülsenbohrung 119 begrenzenden Wandung 136 der Hülse 116, auch Innenkontur genannt, dadurch im Aufweitungsabschnitt 131 einem bogenförmigen oder gekrümmten Verlauf, so dass eine Art Sektglasform gebildet ist.

Die Bohrung 119 ist weiter so gestaltet, dass die Wandstärke 124 der Hülse 116 entlang des Aufweitungsabschnitts 131 in Richtung des zweiten Hülsenendes 118 prozentual konstant abnimmt. Die Abnahme erfolgt korrespondierend zu der Veränderung des Durchmessers 132, also pro gleich langer, aufeinanderfolgender Wegeinheiten 135. Am zweiten Hülsenende 118, etwa im weiteren zylindrischen Abschnitt 131a, ist beispielsweise eine Wandstärke 124 von 0,6 oder 0,8 mm vorgesehen. Dies trägt zwar zu einem Spannungssprung in der Verklebung bei, verhindert auf der anderen Seite jedoch ein Reißen und Brechen der Hülse 116, wenn diese zu dünn wird und die Wandstärke 124 weiter abnimmt.

Durch die beschriebene Hülsenauslaufform werden die eingangs genannten Vorteile und Funktionen ermöglicht.

Optional ist am zweiten Hülsenende 118 eine Fase 137 von 45° ausgebildet.

Figur 5 zeigt überlagert einen Schubspannungsverlauf K1 der beschriebenen Hülse 116 im Hülsenauslauf 128 und einen Schubspannungsverlauf K2 einer Hülse, bei der der Hülsenauslauf einen kegeligen, also linearen Verlauf hat. Die beiden Verläufe sind schematisch gezeigt und ergeben sich unter Zugbelastung entlang der Bohrungslängsachse 120 (X-Achse) in einem betriebsgemäß montierten Zustand im Flanscheinleger 113. Man erkennt, dass der Verlauf K1 durch das optimierte Design deutlich flacher und konstanter ist und insbesondere am zweiten Hülsenende 118 keine signifikante Spannungsüberhöhung stattfindet.

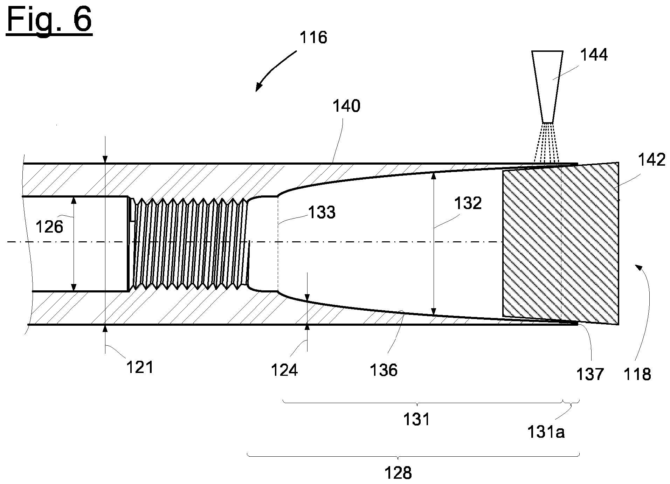

Figur 6 zeigt das zweite Hülsenende 118 mit dem Hülsenauslauf 128 und einem darin angeordneten Hilfswerkzeug 142, sowie eine Sandstrahl-Vorrichtung 144 zur Bearbeitung der äußeren Oberfläche 140 der Hülse 116. Der Hülsenauslauf 128 und insbesondere der weitere Abschnitt 131a weist eine sehr geringe Wandstärke 124 auf. Diese kann im weiteren Abschnitt 131a beispielsweise nur noch 0,8 mm oder 0,6 mm oder weniger betragen. Bei einer Oberflächenbearbeitung der Hülse 116 durch Sandstrahlen, initiales Drehen oder Sheradisieren besteht die Gefahr, dass sich der Hülsenauslauf 128 im weiteren Abschnitt 131a nach innen verbiegt. Abhilfe schafft hier ein Hilfswerkzeug 142, welches vom zweiten Hülsenende 118 aus in den Hülsenauslauf 128 eingesetzt wird und zumindest im weiteren Abschnitt 131a an der Wandung 136 anliegt. Das Hilfswerkzeug 142 weist eine keglige Form auf und besitzt eine relativ hohe Steifigkeit.

### BEZUGSZEICHENLISTE

- 100: Windenergieanlage
- 101: Turm
- 102: Gondel
- 103: Rotor
- 104: (Windenergieanlagen)Rotorblatt
- 105: Rotornabe
- 106: Rotorblattwurzelbereich
- 107: Übergangsbereich
- 108: Profilbereich
- 109: Druckseite
- 110: Saugseite
- 111: Längserstreckungsrichtung
- 112: Rotorblattanschluss
- 113: Flanscheinleger
- 114: Laminat
- 115: Laminat
- 116: Hülse
- 117: erstes Hülsenende
- 118: zweites Hülsenende
- 119: Hülsenbohrung
- 120: Bohrungslängsachse
- 121: Außendurchmesser
- 122: erster Abschnitt
- 123: zweiter Abschnitt
- 124: Wandstärke
- 125: dritter Abschnitt
- 126: Innendurchmesser
- 127: Gewindeabschnitt
- 128: Hülsenauslauf
- 129: zylindrischer Abschnitt
- 130: Radiusabschnitt
- 131: Aufweitungsabschnitt
- 131a: weiterer Abschnitt
- 132: Durchmesser
- 133: Beginn
- 134: Ende
- 135: Segment
- 136: Wandung
- 137: Fase
- 140: Oberfläche
- 142: Hilfswerkzeug
- 144: Sandstrahl-Vorrichtung
- 150: Teilungsstelle
- 151: blattwurzelseitiges Rotorblattsegment
- 152: blattspitzenseitiges Rotorblattsegment
- K1: Schubspannungsverlauf entsprechend einer Hülse gemäß dem Ausführungsbeispiel der Erfindung
- K2: Schubspannungsverlauf entsprechend einer Hülse aus dem Stand der Technik

## Patentansprüche

1. Hülse (116) für ein Windenergieanlagenrotorblatt (104), die Hülse (116) aufweisend
- ein erstes Hülsenende (117 und ein gegenüberliegendes zweites Hülsenende (118); und
- eine Hülsenbohrung (119), die sich in einem Bereich zwischen dem ersten Hülsenende (117) und dem zweiten Hülsenende (118) erstreckt und eine Bohrungslängsachse (120) aufweist;
wobei, entlang der Bohrungslängsachse (120) in Richtung des zweiten Hülsenendes (118),
- die Hülsenbohrung (119) einen Gewindeabschnitt (127) aufweist, und
- die Hülse (116) einen dem Gewindeabschnitt (127) folgenden Hülsenauslauf (128) aufweist, der einen Aufweitungsabschnitt (131) der Hülsenbohrung (119) umfasst, in welchem sich ein Durchmesser (132) der Hülsenbohrung (119) monoton vergrößert während eine Durchmesserzunahme monoton abnimmt, wobei sich der Durchmesser (132) im Aufweitungsabschnitt (131) derart vergrößert, dass der Hülsenauslauf (128) im Aufweitungsabschnitt (131) einen bogenförmigen Verlauf aufweist.

2. Hülse (116) nach Anspruch 1, wobei die Hülse (116) zumindest im Bereich des Aufweitungsabschnitts (131), bevorzugt im Bereich des Hülsenauslaufs (128), einen konstanten Außendurchmesser (121) aufweist.

3. Hülse (116) nach einem der vorhergehenden Ansprüche, wobei sich der Durchmesser (132) im Aufweitungsabschnitt (131) derart vergrößert, dass eine Wandstärke (124) der Hülse (116) entlang des Aufweitungsabschnitts (131) in Richtung des zweiten Hülsenendes (118) prozentual konstant abnimmt.

4. Hülse (116) nach einem der Ansprüche 1 bis 2, wobei sich der Durchmesser (132) im Aufweitungsabschnitt (131) derart vergrößert, dass eine Querschnittsfläche der Hülse (116) entlang des Aufweitungsabschnitts (131) in Richtung des zweiten Hülsenendes (118) prozentual konstant abnimmt.

5. Hülse (116) nach einem der vorhergehenden Ansprüche, wobei der Aufweitungsabschnitt (131) mindestens 50%, insbesondere mindestens 60%, mindestens 70%, mindestens 80% oder mindestens 90%, des Hülsenauslaufs (128) bildet.

6. Hülse (116) nach einem der vorhergehenden Ansprüche, wobei eine Wandstärke (124) der Hülse (116) zwischen dem ersten Hülsenende (117) und dem Gewindeabschnitt (127), zumindest teilweise zunimmt.

7. Hülse (116) nach einem der vorhergehenden Ansprüche, wobei am zweiten Hülsenende (118) eine umlaufende Fase (137) oder ein umlaufender Radius ausgebildet ist.

8. Hülse (116) nach einem der vorhergehenden Ansprüche, wobei die Hülse (116) einstückig gefertigt ist.

9. Hülse (116) nach einem der vorhergehenden Ansprüche, wobei sich die Hülsenbohrung (119) durchgängig von dem ersten Hülsenende (117) zu dem zweiten Hülsenende (118) erstreckt.

10. Flanscheinleger für ein Windenergieanlagenrotorblatt (104), aufweisend mehrere nebeneinander angeordnete Hülsen (116) nach einem der vorhergehenden Ansprüche, wobei die Hülsen (116) in ein oder mehrere Laminatlagen eingebettet sind.

11. Windenergieanlagenrotorblatt (104), aufweisend einen Rotorblattanschluss (112) mit mehreren, kreisförmig angeordneten Hülsen (116) nach einem der vorhergehenden Ansprüche.

12. Windenergieanlagenrotorblatt (104), aufweisend ein Rotorblattsegment mit einem Verbindungsflansch mit mehreren, nebeneinander angeordneten Hülsen (116) nach einem der vorhergehenden Ansprüche.

13. Windenergieanlage (100), aufweisend
einen Rotor (103) mit einem oder mehreren Rotorblättern (104) nach einem der vorhergehenden Ansprüche.

## Claims

1. A bushing (116) for a wind turbine rotor blade (104), the bushing (116) comprising
- a first bushing end (117) and an opposite second bushing end (118); and
- a bushing bore (119) which extends in a region between the first bushing end (117) and the second bushing end (118) and comprises a bore longitudinal axis (120);
- wherein, along the bore longitudinal axis (120) in the direction of the second bushing end (118),
- the bushing bore (119) comprises a threaded portion (127), and
- the bushing (116) comprises a bushing runout (128) that follows the threaded portion (127), said bushing runout comprising a widening portion (131) of the bushing bore (119), in which a diameter (132) of the bushing bore (119) enlarges at least monotonically while an increase in diameter decreases at least monotonically, wherein the diameter (132) in the widening portion (131) is enlarged such, that the bushing runout (128) comprises an arc-shaped course in the widening portion (131).

2. The bushing (116) according to claim 1, wherein the bushing (116) comprises, at least in the region of the widening portion (131), preferably in the region of the bushing runout (128), a constant outside diameter (121).

3. The bushing (116) according to any one of the preceding claims, wherein the diameter (132) in the widening portion (131) enlarges in such a manner that a wall thickness (124) of the bushing (116) decreases constantly on a percentage basis along the widening portion (131) in the direction of the second bushing end (118).

4. The bushing (116) according to any one of claims 1 to 2, wherein the diameter (132) in the widening portion (131) enlarges in such a manner that a cross-sectional area of the bushing (116) decreases constantly on a percentage basis along the widening portion (131) in the direction of the second bushing end (118).

5. The bushing (116) according to any one of the preceding claims, wherein the widening portion (131) forms at least 50%, in particular at least 60%, at least 70%, at least 80% or at least 90%, of the bushing runout (128).

6. The bushing (116) according to any one of the preceding claims, wherein a wall thickness (124) of the bushing (116) increases at least partially between the first bushing end (117) and the threaded portion (127).

7. The bushing (116) according to any one of the preceding claims, wherein a circumferential chamfer (137) or a circumferential radius is configured on the second bushing end (118) .

8. The bushing (116) according to any one of the preceding claims, wherein the bushing (116) is produced in one piece.

9. The bushing (116) according to any one of the preceding claims, wherein the bushing bore (119) extends continuously from the first bushing end (117) to the second bushing end (118).

10. A flange insert for a wind turbine rotor blade (104), comprising multiple bushings (116) arranged next to one another according to any one of the preceding claims, wherein the bushings (116) are embedded in one or more laminate layers.

11. A wind turbine rotor blade (104), comprising a rotor blade attachment (112) having multiple bushings (116) arranged in a circle according to any one of the preceding claims.

12. A wind turbine rotor blade (104), comprising a rotor blade segment having a connecting flange comprising multiple bushings (116) arranged next to one another according to any one of the preceding claims.

13. A wind turbine (100), comprising a rotor (103) having one or more rotor blades (104) according to any one of the preceding claims.

## Revendications

1. Manchon (116) pour une pale de rotor d'éolienne (104), le manchon (116) présentant
- une première extrémité de manchon (117) et une deuxième extrémité de manchon (118) opposée ; et
- un alésage de manchon (119) qui s'étend dans une zone entre la première extrémité de manchon (117) et la deuxième extrémité de manchon (118) et présente un axe longitudinal d'alésage (120) ;
sachant que, le long de l'axe longitudinal d'alésage (120) en direction de la deuxième extrémité de manchon (118),
- l'alésage de manchon (119) présente une section de filetage (127), et
- le manchon (116) présente un bec de manchon (128) consécutif à la section de filetage (127), qui comprend une section d'évasement (131) de l'alésage de manchon (119) dans laquelle un diamètre (132) de l'alésage de manchon (119) s'agrandit de manière monotone tandis d'une augmentation de diamètre diminue de manière monotone, sachant que le diamètre (132) dans la section d'évasement (131) s'agrandit de telle manière que le bec de manchon (128) présente un tracé en forme d'arc dans la section d'évasement (131) .

2. Manchon (116) selon la revendication 1, sachant que le manchon (116) présente un diamètre extérieur (121) constant au moins dans la zone de la section d'évasement (131), de préférence dans la zone du bec de manchon (128).

3. Manchon (116) selon l'une des revendications précédentes, sachant que le diamètre (132) dans la section d'évasement (131) s'agrandit de telle manière qu'une épaisseur de paroi (124) du manchon (116) diminue de manière constante en pourcentage le long de la section d'évasement (131) en direction de la deuxième extrémité de manchon (118).

4. Manchon (116) selon l'une des revendications 1 à 2, sachant que le diamètre (132) dans la section d'évasement (131) s'agrandit de telle manière qu'une aire en coupe transversale du manchon (116) diminue de manière constante en pourcentage le long de la section d'évasement (131) en direction de la deuxième extrémité de manchon (118).

5. Manchon (116) selon l'une des revendications précédentes, sachant que la section d'évasement (131) forme au moins 50 %, en particulier au moins 60 %, au moins 70 %, au moins 80 % ou au moins 90 %, du bec de manchon (128).

6. Manchon (116) selon l'une des revendications précédentes, sachant qu'une épaisseur de paroi (124) du manchon (116) augmente au moins en partie entre la première extrémité de manchon (117) et la section de filetage (127).

7. Manchon (116) selon l'une des revendications précédentes, sachant qu'un chanfrein (137) périphérique ou un rayon périphérique est constitué au niveau de la deuxième extrémité de manchon (118).

8. Manchon (116) selon l'une des revendications précédentes, sachant que le manchon (116) est fabriqué d'une seule pièce.

9. Manchon (116) selon l'une des revendications précédentes, sachant que l'alésage de manchon (119) s'étend de manière continue de la première extrémité de manchon (117) à la deuxième extrémité de manchon (118).

10. Tambour bridé pour une pale de rotor d'éolienne (104), présentant plusieurs manchons (116) selon l'une des revendications précédentes, disposés les uns à côté des autres (116), sachant que les manchons (116) sont incorporés en une ou plusieurs couches de stratifié.

11. Pale de rotor d'éolienne (104), présentant un raccord de pale de rotor (112) avec plusieurs manchons (116) selon l'une des revendications précédentes, disposés en forme de cercle.

12. Pale de rotor d'éolienne (104), présentant un segment de pale de rotor avec une bride de liaison avec plusieurs manchons (116) selon l'une des revendications précédentes, disposés les uns à côté des autres.

13. Éolienne (100), présentant
un rotor (103) avec une ou plusieurs pales de rotor (104) selon l'une des revendications précédentes.
